# EUROPÄISCHE PATENTSCHRIFT

(11) **EP 1 101 683 B1**
(45) Veröffentlichungstag und Bekanntmachung des Hinweises auf die Patenterteilung: **15.10.2003**
(21) Anmeldenummer: 00124977.0
(22) Anmeldetag: 16.11.2000
(51) Int. Cl.: B61C 17/04, B61D 3/20

(54) **Führerhausmodul für schienengebundenes Transportsystem**
Driver's cabin module for rail transportation system
Module de cabine de conduite pour système de transport sur rail

(30) Priorität: 18.11.1999 DE 19955393
(43) Veröffentlichungstag der Anmeldung: 23.05.2001
(73) Patentinhaber: DaimlerChrysler AG, 70567 Stuttgart (DE)
(72) Erfinder: Wöhlert, Jürgen, 34128 Kassel (DE); Ikenstein, Gerhard, 34479 Brenna (DE)
(74) Vertreter: Akers, Noel James

(56) Entgegenhaltungen:
- EP-A- 0 630 789
- DE-A- 2 744 011
- DE-A- 3 416 218
- DE-A- 19 621 962
- DE-A- 19 652 700
- DE-U- 9 303 516
- DE-U- 29 619 649

## Beschreibung

Die Erfindung bezieht sich auf ein Führerhausmodul für ein schienengebundenes Transportsystem.

Es ist allgemein bekannt, schienengebundene Gütertransportsysteme für genormte Wechselbehälter einzusetzen, welche aus mehreren Containertragwagen und einem oder zwei kombinierten Antriebs-/Steuerwagen bestehen, die ebenfalls Container befördern können.

Darüber hinaus werden ähnliche schienengebundene Transportsysteme entwickelt, bei denen der Antrieb in einem separaten führerhauslosen Triebfahrzeug untergebracht ist, während die Steuerung von den an den Zugenden befindlichen Steuerwagen erfolgt, die ebenfalls Container befördern können. Die Steuerung erfolgt bei diesen Transportsystemen von Führerhäusern aus, die integrierte Komponenten des Antriebs-/Steuerwagens bzw. der Steuerwagen sind.

Aus der DE-196 52 700 A1 ist ein Führerhausmodul eines schienengebundenen Transportsystem bekannt, welches mit Führertisch und Sitz und zum Zugang mindestens eine Tür angerüstet ist. Dieses Modul entspricht dem Oberbegriff des Anspruchs 1.

Diese Modul wird beweglich an einem Ende eines Wagen befestigt.

Der Erfindung liegt die Aufgabe zugrunde, ein Führerhausmodul für ein schienengebundenes Transportsystem anzugeben, das freizügig auf einen beliebigen Containertragwagen aufgesetzt werden kann und diesen dadurch zum Steuerwagen macht. Der Containertragwagen mit aufgesetztem Führerhausmodul bildet dabei zusammen mit einer Vielzahl weiterer Containertragwagen und mindestens einem Antriebsmodul eine geschlossene Zugeinheit.

Diese Aufgabe wird gelöst durch ein Führerhausmodul eines aus einer Vielzahl von Containertragwagen und mindestens einem Antriebsmodul bestehenden schienengebundenen Transportsystems, wobei das Führerhaus mit Führertisch und Sitz ausgerüstet ist und zum Zugang mindestens eine Tür vorgesehen ist, dadurch gekennzeichnet, daß das Führerhausmodul aus einem auf einem Grundrahmen montiertem Führerhaus gebildet ist und der Grundrahmen mit Befestigungsorganen standardisierter Container ausgerüstet ist, welche das Aufsetzen auf einen beliebigen Containertragwagen ermöglichen.

Die mit der Erfindung erzielbaren Vorteile bestehen insbesondere darin, daß das vorgeschlagene Führerhausmodul für ein schienengebundenes Transportsystem auf jeden beliebigen Containertragwagen aufgesetzt werden kann. Dadurch wird die Konzeption, Herstellung, Beschaffung und Bereitstellung von besonderen Steuerwagen vermieden und die erforderliche Typenvielfalt der Fahrzeuge wird reduziert, was die Realisierung eines kostengünstigen Transportsystems fördert. Das Führerhausmodul kann am Zielort durch die üblicherweise vorhandene Containerwechseleinrichtung auf einen Containertragwagen aufgesetzt bzw. von einem Zugende auf das andere Zugende umgesetzt werden. Daher ist pro Zug nur ein Führerhausmodul notwendig, was die notwendigen Investitionen vermindert und gleichzeitig im Zugverband Platz für einen weiteren Container schafft.

Beim Kuppeln zweier Zugverbände oder bei der Neuzusammenstellung eines Zugverbandes entfällt das Rangieren der bisher üblichen eigenen Steuerwagen an das Zugende. Auch im vergrößerten, aus zwei Zugverbänden zusammengesetzten Zugverband ist vorteilhaft nur ein Führerhausmodul notwendig, alle Containertragwagen können voll mit Containern (Wechselbehältern) beladen werden.

Vorteilhafte Ausgestaltungen der Erfindung sind in den Unteransprüchen gekennzeichnet.

Weitere Vorteile des vorgeschlagenen Führerhausmoduls ergeben sich aus der nachstehenden Beschreibung.

Die Erfindung wird nachstehend anhand der in der Zeichnung dargestellten Ausführungsbeispiele näher erläutert. Es zeigen:
- Fig. 1: eine Seitenansicht eines Containertragwagens mit Führerhausmodul und Container,
- Fig. 2: eine Sicht auf einen Containertragwagen mit Führerhausmodul und Container.

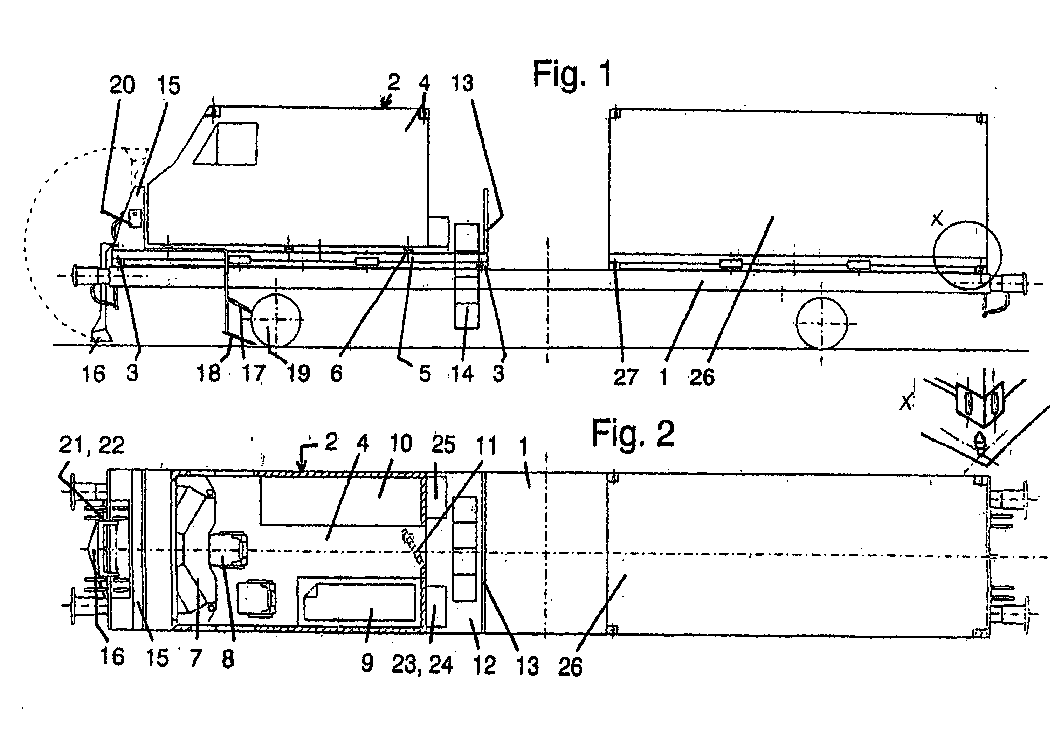

In Fig. 1 ist eine Seitenansicht eines Containertragwagens mit Führerhausmodul und Container dargestellt. Es ist ein Containertragwagen 1 zu erkennen, auf dem ein Führerhausmodul 2 mit standardisierten Befestigungsorganen 3 aufgesetzt ist. Das Führerhausmodul 2 besteht im wesentlichen aus dem eigentlichen Führerhaus 4, einem Grundrahmen 5 (Tragrahmen) sowie einem Federungssystem 6 zwischen Führerhaus und Grundrahmen. Die am Grundrahmen 5 angebrachten Befestigungsorgane 3 sind gleich ausgebildet wie die der standardisierten Container (Wechselbehälter, siehe Ziffern 26, 27). Der Grundrahmen 5 kann durch die auf Containerumschlagplätzen üblichen Wechseleinrichtungen an den standardisierten Befestigungsorganen 3 gepackt und aufgesetzt oder umgesetzt werden, beispielsweise auf einen anderen Containertragwagen.

Für den Zugang vom Gleisbett zum Führerhaus 4 sind am Grundrahmen 5 vorzugsweise auf jeder Fahrzeugseite ein Geländer 13 und nach unten klappbare oder einschiebbare oder schwenkbare Aufstiege 14 (Leitern mit Handstange) befestigt. Vor dem Führerhaus 4 ist direkt auf dem Grundrahmen 5 ein kräftiger Rammschutz 15 zum Schutz des Personals bei Kollisionen angebracht. Gleichfalls am Grundrahmen 5 ist zum Schutz vor Entgleisungen des Containertragwagens 1 ein Schienenräumer 16 montiert, der nach dem erfolgten Aufsetzen auf den Containertragwagen 1 in Fahrstellung vor das Fahrzeug geschwenkt wird.

Weiterhin sind bedarfsweise eine Spurkranzschmierdüse 17 und eine Sandstreuvorrichtung 18 am Grundrahmen 5 befestigt und können vor die führenden Räder 19 des Fahrzeuges geschwenkt werden. Die Sandstreuvorrichtung 18 dient zur manuellen oder automatischen Betätigung bei Notbremsungen. Der erforderliche Sand wird in einem am Grundrahmen 5 montierten Sandspeicher 20 gespeichert.

Auf dem Containertragwagen 1 ist zweckmäßig außer dem Führerhausmodul 2 ein Container 26 mit standardisierten Befestigungsorganen 27 aufgesetzt.

In Fig. 2 ist eine Sicht auf einen Containertragwagen mit Führerhausmodul und Container dargestellt. Es ist der Containertragwagen 1 mit aufgesetztem Führerhausmodul 2 und aufgesetztem Container 26 zu erkennen. Insbesondere ist ein Einblick in den Innenraum des Führerhauses 4 mit Führertisch 7 und Sitz 8 für den Lokführer skizziert. Bedarfsweise ist das Führerhaus 4 mit Schlafgelegenheit 9 und Naßzelle/Toilette 10 ausgerüstet. Der Zugang zum Führerhaus 4 erfolgt beispielsweise über eine hintere Tür 11 und einen Übergang 12 mit Geländer 13. Der Übergang 12 ist über die in Fig. 1 bereits erwähnten Aufstiege 14 zugänglich. Alternativ zur Ausführungsform mit hinterer Tür 11 kann das Führerhaus 4 auch mit Seitentüren (nicht dargestellt) ausgerüstet sein.

Im vorderen Bereich des Containertragwagens 1 befindet sich am Führerhausmodul 2 außer dem Rammschutz 15 und dem Schienenräumer 16 mindestens eine Kabelsteckdose 21, wobei zweckmäßig mit dem Herabschwenken des Schienenräumers 16 gleichzeitig und automatisch die Kabelsteckdose 21 mit Steuerleitungen/Energieversorgungsleitungen 22 verbunden wird. Hierdurch erfolgt automatisch die elektrisch/elektronische Ankopplung des Führerhausmoduls 2 an den Containertragwagen 1.

Auf dem Grundrahmen 5 sind zur Energieversorgung eine aufladbare Batterie 23 zur Speisung der Beleuchtung und Elektronik und/oder eine eigene (autarke) Energieversorgung mit Stromaggregat 24 vorhanden, wenn das Führerhausmodul nicht von dem Triebfahrzeug des Zugverbandes (Antriebsmodul) gespeist wird. Das Stromaggregat 24 kann einen Verbrennungsmotor oder Brennstoffzellen oder Solarzellen aufweisen. Zur Beheizung des Führerhauses 4 ist ein Heizgerät 25, beispielsweise ein heizölgefeuerter Heizkessel, auf dem Grundrahmen 5 montiert.

### Bezugszeichenliste

- 1: Containertragwagen
- 2: Führerhausmodul
- 3: Befestigungsorgane
- 4: Führerhaus
- 5: Grundrahmen
- 6: Federungssystem
- 7: Führertisch
- 8: Sitz
- 9: Schlafgelegenheit
- 10: Naßzelle/Toilette
- 11: Tür
- 12: Übergang
- 13: Geländer
- 14: Aufstieg
- 15: Rammschutz
- 16: Schienenräumer
- 17: Spurkranzschmierdüse
- 18: Sandstreuvorrichtung
- 19: Rad
- 20: Sandbehälter
- 21: Kabelsteckdose
- 22: Steuerleitungen/Energieversorgungsleitungen
- 23: Batterie
- 24: Stromaggregat
- 25: Heizgerät
- 26: Container
- 27: Befestigungsorgane

## Patentansprüche

1. Führerhausmodul (2) eines aus einer Vielzahl von Containertragwagen (1) und mindestens einem Antriebsmodul bestehenden schienengebundenen Transportsystems, wobei das Führerhaus (4) mit Führertisch (7) und Sitz (8) ausgerüstet und zum Zugang mindestens eine Tür (11) vorgesehen ist, **dadurch gekennzeichnet, daß** das Führerhausmodul (2) aus einem auf einem Grundrahmen (5) montiertem Führerhaus (4) gebildet ist und der Grundrahmen (5) mit Befestigungsorganen (3) standardisierter Container ausgerüstet ist, welche das Aufsetzen auf einen beliebigen Containertragwagen (1) ermöglichen.

2. Führerhausmodul nach Anspruch 1, **dadurch gekennzeichnet, daß** ein Federungssystem (6) zwischen Grundrahmen (5) und Führerhaus (4) angeordnet ist.

3. Führerhausmodul nach Anspruch 1 und/oder 2, **dadurch gekennzeichnet, daß** auf dem Grundrahmen (5) vor dem Führerhaus (4) ein Rammschutz (15) angebaut ist.

4. Führerhausmodul nach einem der vorstehenden Ansprüche, **dadurch gekennzeichnet, daß** an dem Grundrahmen (5) ein schwenkbarer Schienenräumer (16) befestigt ist.

5. Führerhausmodul nach einem der vorstehenden Ansprüche, **dadurch gekennzeichnet, daß** eine Sandstreuvorrichtung (18) mit Sandbehälter (20) angebracht ist.

6. Führerhausmodul nach einem der vorstehenden Ansprüche, **dadurch gekennzeichnet, daß** eine Spurkranzschmierdüse (17) vor den führenden Rädern (19) angebracht ist.

7. Führerhausmodul nach einem der vorstehenden Ansprüche, **dadurch gekennzeichnet, daß** eine Kabelsteckdose (21) für Steuerleitungen und/oder Energieversorgungsleitungen (22) vorgesehen ist.

8. Führerhausmodul nach den Ansprüchen 4 und 7, **dadurch gekennzeichnet, daß** die elektrische Verbindung zwischen Kabelsteckdose (21) und den Steuerleitungen und/oder Energieversorgungsleitungen (22) automatisch durch Herabschwenken des Schienenräumers (16) erfolgt.

9. Führerhausmodul nach einem der vorstehenden Ansprüche, **dadurch gekennzeichnet, daß** zumindest ein einschiebbarer oder klappbarer oder schwenkbarer Aufstieg (14) vorhanden ist.

10. Führerhausmodul nach einem der vorstehenden Ansprüche, **dadurch gekennzeichnet, daß** senkrecht zur Fahrzeuglängsachse ein Übergang (12) mit Geländer (13) vorhanden ist.

11. Führerhausmodul nach einem der vorstehenden Ansprüche, **dadurch gekennzeichnet, daß** zur Energiespeicherung eine aufladbare Batterie (23) vorhanden ist.

12. Führerhausmodul nach einem der vorstehenden Ansprüche, **dadurch gekennzeichnet, daß** zur autarken Energieversorgung ein Stromaggregat (24) mit Verbrennungsmotor oder Brennstoffzellen oder Solarzellen vorhanden ist.

13. Führerhausmodul nach einem der vorstehenden Ansprüche, **dadurch gekennzeichnet, daß** das Führerhaus (4) mit einer Schlafgelegenheit (9) ausgerüstet ist.

14. Führerhausmodul nach einem der vorstehenden Ansprüche, **dadurch gekennzeichnet, daß** das Führerhaus (4) mit einer Naßzelle (10) ausgerüstet ist.

15. Führerhausmodul nach einem der vorstehenden Ansprüche, **dadurch gekennzeichnet, daß** das Führerhaus (4) mit einem Heizgerät (26) ausgerüstet ist.

## Claims

1. Driver's cab module (2) of a rail-bound transport system which is composed of a multiplicity of container wagons (1) and at least one drive module, the driver's cab (4) being equipped with a driver's table (7) and seat (8) and at least one door (11) being provided for access, **characterized in that** the driver's cab module (2) is formed from a driver's cab (4) mounted on a base frame (5) and the base frame (5) is equipped with attachment elements (3) of standardized containers, which attachment elements permit installation on any desired container wagon (1).

2. Driver's cab module according to Claim 1, **characterized in that** a spring system (6) is arranged between the base frame (5) and driver's cab (4).

3. Driver's cab module according to Claim 1 and/or 2, **characterized in that** an anti-telescoping device (15) is attached to the base frame (5) in front of the driver's cab (4).

4. Driver's cab module according to one of the preceding claims, **characterized in that** a pivotable rail guard (16) is attached to the base frame (5).

5. Driver's cab module according to one of the preceding claims, **characterized in that** a sand distributor (18) with sand box (20) is provided.

6. Driver's cab module according to one of the preceding claims, **characterized in that** a wheel lubricating nozzle (17) is provided in front of the leading wheels (19).

7. Driver's cab module according to one of the preceding claims, **characterized in that** a cable socket (21) is provided for control leads and/or power supply leads (22) .

8. Driver's cab module according to Claims 4 and 7, **characterized in that** the electrical connection between the cable socket (21) and the control leads and/or power supply leads (22) is made automatically by pivoting the rail guard (16) down.

9. Driver's cab module according to one of the preceding claims, **characterized in that** there is at least a set of entry steps (14) which can be pushed in or folded or pivoted.

10. Driver's cab module according to one of the preceding claims, **characterized in that** a walkway (12) with a rail (13) is provided perpendicular to the longitudinal axis of the vehicle.

11. Driver's cab module according to one of the preceding claims, **characterized in that** a chargeable battery (23) is provided for storing energy.

12. Driver's cab module according to one of the preceding claims, **characterized in that** a power unit (24) with internal combustion engine or fuel cells or solar cells is provided for independent supply power.

13. Driver's cab module according to one of the preceding claims, **characterized in that** the driver's cab (4) is equipped with sleeping facilities (9).

14. Driver's cab module according to one of the preceding claims, **characterized in that** the driver's cab (4) is equipped with a wet cell (10).

15. Driver's cab module according to one of the preceding claims, **characterized in that** the driver's cab (4) is equipped with a heater (26).

## Revendications

1. Module de cabine de conduite (2) pour un système de transport sur rail se composant d'une pluralité de wagons de transport de conteneurs (1) et d'au moins un module d'entraînement, dans lequel la cabine de conduite (4) est équipée d'une table de conduite (7) et d'un siège (8) et au moins une porte (11) est prévue pour l'accès, **caractérisé en ce que** le module de cabine de conduite (2) est formé d'une cabine de conduite (4) montée sur un cadre de base (5) et le cadre de base (5) est équipé d'organes de fixation (3) de conteneurs standardisés, qui permettent de les placer sur un wagon de transport de conteneurs (1) quelconque.

2. Module de cabine de conduite selon la revendication 1, **caractérisé en ce qu'**un système de suspension (6) est disposé entre le cadre de base (5) et la cabine de conduite (4).

3. Module de cabine de conduite selon la revendication 1 et/ou 2, **caractérisé en ce qu'**une protection du cadre (15) est construite sur le cadre de base (5) devant la cabine de conduite (4) .

4. Module de cabine de conduite selon l'une quelconque des revendications précédentes,
**caractérisé en ce qu'**un chasse-pierre pivotant (16) est fixé sur le cadre de base (5).

5. Module de cabine de conduite selon l'une quelconque des revendications précédentes, **caractérisé en ce qu'**une sablière (18) est montée avec un récipient pour le sable (20).

6. Module de cabine de conduite selon l'une quelconque des revendications précédentes, **caractérisé en ce qu'**une tubulure de lubrification des boudins (17) est montée devant les roues de guidage (19).

7. Module de cabine de conduite selon l'une quelconque des revendications précédentes, **caractérisé en ce qu'**une prise de câble (21) pour des lignes de commande et/ou des lignes d'alimentation en énergie (22) est prévue.

8. Module de cabine de conduite selon les revendications 4 et 7, **caractérisé en ce que** la connexion électrique entre la prise de câble (21) et les lignes de commande et/ou les lignes d'alimentation en énergie (22) s'effectue automatiquement par un rabattement du chasse-pierre (16).

9. Module de cabine de conduite selon l'une quelconque des revendications précédentes, **caractérisé en ce qu'**au moins un dispositif de montée (14) insérable ou rabattable ou pivotant est prévu.

10. Module de cabine de conduite selon l'une quelconque des revendications précédentes, **caractérisé en ce qu'**il est prévu une passerelle (12) avec une balustrade (13) perpendiculairement à l'axe longitudinal du véhicule.

11. Module de cabine de conduite selon l'une quelconque des revendications précédentes, **caractérisé en ce qu'**une batterie chargeable (23) est prévue pour stocker l'énergie.

12. Module de cabine de conduite selon l'une quelconque des revendications précédentes, **caractérisé en ce qu'**il est prévu une unité de courant (24) avec un moteur à combustion interne ou des cellules de combustible ou des cellules solaires pour l'alimentation autarcique en énergie.

13. Module de cabine de conduite selon l'une quelconque des revendications précédentes, **caractérisé en ce que** la cabine de conduite (4) est équipée d'un lit (9).

14. Module de cabine de conduite selon l'une quelconque des revendications précédentes, **caractérisé en ce que** la cabine de conduite (4) est équipée d'un bloc-bain (10).

15. Module de cabine de conduite selon l'une quelconque des revendications précédentes, **caractérisé en ce que** la cabine de conduite (4) est équipée d'un appareil de chauffage (26).
